**Europäisches Patentamt**

**European Patent Office**

**Office européen des brevets**

(19)

(11) Numéro de publication: **0 176 377**
**B1**

# (12) FASCICULE DE BREVET EUROPÉEN

(45) Date de publication du fascicule du brevet:
**14.12.88**

(21) Numéro de dépôt: **85401533.6**

(22) Date de dépôt: **25.07.85**

(51) Int. Cl.⁴: **G 02 F 1/055,** G 02 F 1/03

(54) **Dispositif d'alimentation autonome pour dispositif d'observation, notamment à effet stéréoscopique.**

(30) Priorité: **16.08.84 FR 8412832**

(43) Date de publication de la demande:
**02.04.86 Bulletin 86/14**

(45) Mention de la délivrance du brevet:
**14.12.88 Bulletin 88/50**

(84) Etats contractants désignés:
**BE DE GB IT NL SE**

(56) Documents cité:
**DE-A-2 306 311**
**DE-A-2 632 483**

(73) Titulaire: **ETAT- FRANCAIS représenté par le DELEGUE GENERAL POUR L'ARMEMENT (DPAG), Bureau des Brevets et Inventions de la Délégation Générale pour l'Armement 26, Boulevard Victor, F-75996 Paris Armées (FR)**

(72) Inventeur: **Lafonta, Fernande, 40, rue Bezout, F-75014 Paris (FR)**
Inventeur: **Lafonta, Paul, 40, rue Bezout, F-75014 Paris (FR)**

EP 0 176 377 B1

LIBER, STOCKHOLM 1988

## Description

La présente invention a pour objet un dispositif d'alimentation autonome pour dispositif d'observation muni d'au moins une cellule électro-optique à effet capacitif contenant un matériau électro-optique coopérant avec un système d'électrodes de commande recevant des signaux électriques d'amplitude élevée, et comportant des moyens d'horloge pour permettre la commande de l'application périodique de signaux électriques de commande sur le système d'électrodes des cellules électrooptiques.

On connait comme le montre par exemple le document DE-A-2 632 483 pour le cas de cellules à cristaux liquides, des appareillages d'observation d'image à effet stéréoscopique mettant en oeuvre une paire de lunettes d'observation comportant un dispositif droit et un dispositif gauche à travers lesquels une personne peut observer une image respectivement à l'aide de son oeil droit et de son oeil gauche.

Dans un appareillage connu le dispositif droit et le dispositif gauche comprennent chacun une cellule électro-optique à effet capacitif constituée par un matériau électro-optique, par exemple du type PLZT et des électrodes de commande associées. Des tensions de commande sont appliquées en alternance aux électrodes de commande des deux cellules pour autoriser en alternance la transmission de la lumière à travers les dispositifs droit et gauche qui comprennent chacun une telle cellule, et créer ainsi un effet stéréoscopique. Dans le cas de l'observation d'images de télévision, ou de cinéma, l'application alternative des tensions de commande aux dispositifs droit et gauche de la paire de lunettes doit en outre être en relation avec les lois de séquencement des images. Ceci peut être effectué par exemple grâce à l'émission, par le récepteur de télévision, d'une onde porteuse par exemple du type infra-rouge ou ultrasonore, modulée par un signal de synchronisation, ou encore grâce à la présence, dans l'image elle-même d'une information spécifique au caractère "droit ou gauche" de l'image. L'appareillage d'observation d'images à effet stéréoscopique doit alors être équipé de moyens de réception de ladite onde porteuse modulée afin de permettre l'extraction de l'information de synchronisation de l'application alternative de tensions de commande aux dispositifs droit et gauche de la paire de lunettes.

Les tensions de commande appliquées aux cellules électrooptiques à effet capacitif sont particulièrement élevées, et peuvent être de l'ordre de 1 000 V. Par suite, l'utilisation de tels niveaux de tension peut s'avérer dangereux pour l'utilisateur de l'appareillage d'observation d'image à effet stéréoscopique particulièrement si le générateur de haute tension est directement monté sur la paire de lunettes.

Dans les systèmes classiques d'observation d'image à effet stéréoscopique, la haute tension nécessaire est d'abord engendrée dans un circuit générateur de haute tension susceptible de délivrer en permanence une haute tension, et cette haute tension est ensuite aiguillée par commoutation alternativement sur chaque paire d'électrodes associée à une cellule. Ceci implique que le convertisseur ou générateur de haute tension travaille en permamence et que le courant appliqué aux électrodes des cellules électrooptiques ne peut guère être limité facilement et simplement autrement que par voie résistive, ce qui gaspille de l'énergie et affecte la rapidité des transitoires. Par ailleurs, il est nécessaire de disposer d'un élément de stockage d'énergie capacitive beaucoup plus grand que les cellules électrooptiques et cet élément de stockage constitue une réserve susceptible d'être dangeureuse. De plus, les commutateurs operant sur une haute tension continue permanente sont relativement complexes.

La présente invention a précisément pour objet de remédier aux inconvénients précités et de réaliser un dispositif d'alimentation autonome qui présente une grande sécurité, un faible encombrement, une consommation d'énergie réduite et une bonne stabilité des signaux générés, tout en offrant une possibilité de réglage des tensions, pour tenir compte des dispersions, et une grande rapidité de commutation sur des charges fortement capacitives.

Ces buts sont atteints grâce à un dispositif d'alimentation du type défini en tête de la description qui, conformément à l'invention comprend un le source d'alimentation basse tension, un circuit de création intermittente d'une haute tension à partir de la source d'alimentation basse tension, un ensemble de commutateurs interposés entre le circuit de création intermittente d'une haute tension et le systeme d'électrodes desdites cellules électrooptiques, et des circuits de traitement des signaux d'horloge pour commander d'une façon synchronisée ledit circuit de création intermittente d'une haute tension et lesdits coomutateurs.

L'invention, grâce à la présence d'un générateur de haute tension de type pulsé, assure le stockage de l'énergie en basse tension, et ne travaille en haute tension qu'au moment du transfert de l'énergie aux cellules électrooptiques. Il est ainsi possible de maîtriser la valeur de l'intensité des courants mis en jeu, et surtout de ne fournir de l'énergie aux cellules électrooptiques qu'aux transitions antérieures des commutations de l'état de ces cellules, puisque, de par leur nature capacitive, les cellules électrooptiques peuvent rester polarisées même une fois déconnectées de la source de haute tension. L'invention assure en outre facilement une récupération d'énergie lors de la commutation d'une cellule à l'autre.

La présente invention est applicable aussi bien à des dispositifs d'observation du type hublot comprenant une cellule électrooptique à effet capacitif unique qu'à des dispositifs d'observation du type lunettes comprenant des première et seconde cellules électrooptiques à effet capacitif coopérant chacune avec un système d'électrodes. Dans ce dernier cas, les circuits de traitement des signaux d'horloge peuvent comprendre des moyens de synchronisation susceptibles de recevoir un signal extérieur de synchronisation pour commander séquentiellement ledit circuit de création intermittente d'une haute tension et lesdits commutateurs.

Selon un mode de réalisation important de la présente invention, le dispositif d'alimentation autonome, appliqué à des lunettes d'observation à effet stéréoscopique, comprend des moyens de réception d'une onde porteuse modulée par des signaux de synchronisation pour permettre la commande de l'application périodique synchronisée de signaux électriques de commande d'amplitude élevée alternativement sur les systèmes d'électrodes desdites première et seconde cellules, les circuits de traitement des signaux d'horloge comprennent des moyens de traitement des signaux de synchronisation reçus par lesdits moyens de réception pour commander séquentiellement ledit circuit de création intermittente d'une haute tension et lesdits commutateurs.

Selon une caractéristique importante de la présente invention, le circuit de création intermittente d'une haute tension comprend une inductance et un organe de commutation montés en série aux bornes de la source d'alimentation basse tension, ainsi qu'un condensateur monté en parallèle sur l'organe de commutation, et ledit organe-de commutation est commandé de façon périodique à partir des circuits de traitement de signaux.

De préférence, le dispositif selon l'invention comprend un premier commutateur monté entre le point commun de l'inductance et de l'organe de commutation et une électrode de l'une des cellules électrooptiques à effet capacitif, et ledit premier commutateur est commandé de manière à être fermé dès le début de l'ouverture de l'organe de commutation et pendant un temps inférieur au temps d'ouverture dudit organe de commutation.

Le dispositif d'alimentation autonome peut en outre comprendre un second commutateur monté entre ladite électrode de l'une des cellules électrooptiques et l'extrémité de l'inductance connectée, par l'intermédiaire d'une diode anti-retour à la source d'alimentation basse tension et ledit second commutateur est commandé de manière à être fermé dès le début de la fermeture de l'organe de commutation et pendant un temps inférieur au temps de fermeture dudit organe de commutation.

Suivant un mode particulier de réalisation, le dispositif d'alimentation autonome comprend des premier et troisième commutateurs montés entre d'une part le point commun de l'inductance et de l'organe de commutation et, d'autre part, une électrode des première et seconde cellules électrooptiques respectivement, et des second et quatrième commutateurs montés entre d'une part l'extrémité de l'inductance connectée, par l'intermédiaire d'une diode anti-retour à la source d'alimentation basse tension et d'autre part respectivement le point commun entre le premier commutateur et la première cellule électrooptique et le point commun entre le troisième commutateur et la seconde cellule électrooptique, les premier et quatrième comoutateurs sont commandés de manière à être fermés simultanément dès le début de l'ouverture de l'organe de commutation, toutes les deux périodes du signal de commande de l'organe de commutation tandis que les second et troisième commutateurs sont commandés de manière à être fermés simultanément dès le début de l'ouverture de l'organe de commutation durant les périodes du signal de commande de l'organe de commutation où les premier et quatrième commutateurs restent ouverts en permanence, et la durée de fermeture des premier, second, troisième et quatrième commutateurs est à chaque fois inférieure à la durée d'ouverture de l'organe de commutation.

Selon d'autres caractéristiques particulières, une diode d'écrètage est montée en parallèle sur le condensateur disposé en parallèle sur l'organe de commutation et une diode de protection peut en outre être connectée en série avec ledit organe de commutation aux bornes dudit condensateur.

Avantageusement, le dispositif selon l'invention comprend un circuit de modulation de la durée de commande de la fermeture de l'organe de cummutation.

Dans ce cas, le dispositif peut comprendre un pont diviseur de mesure de la haute tension appliquée périodiquement au point commun de l'inductance et de l'organe de commutation, un circuit échantillonneur bloqueur, un comparateur entre la tension échantillonnée et une tension de référence $V_{ref}$ et un circuit d'application d'un retard, fonction de la valeur du signal de sortie dudit comparateur, au signal de commande du passage à l'état de fermeture de l'organe de commutation.

Les circuits de traitement des signaux de synchronisation reçus par les moyens de réception peuvent comprendre un circuit d'asservissement de phase, ainsi qu'une matrice de circuits logiques programmable pour la commande de séquences de commutation des commutateurs.

Selon une caractéristique particulière, les commutateurs sont à commande flottante et comprennent un organe de commutation haute tension, tel qu'un transistor bipolaire, un transistor à effet de champ ou un thyristor, monté dans la diagonale d'un pont de diodes, et un coupleur pour l'application d'un signal de commande à l'organe de commutation.

Le coupleur est de préférence de type coupleur piézoélectrique ou transformateur linéaire à la résonance.

La source d'alimentation basse tension, le circuit de création intermittente d'une haute tension, l'ensemble de commutateurs et les circuits de traitement des signaux de synchronisation sont réunis dans un boîtier portatif relié aux moyens de réception et aux première et seconde cellules par trois ou quatre fils de liaison.

Selon un premier mode de fonctionnement possible, l'ensemble des commutateurs est à commande flottante et assure une commande bipolaire de la haute tension appliquée aux électrodes des première et seconde cellules électrooptiques.

Selon un autre mode de fonctionnement possible, l'ensemble de commutateurs assure une commande unipolaire de la haute tension appliquée aux électrodes des première et seconde cellules électrooptiques.

Dans ce cas, les commutateurs peuvent comprendre chacun un transistor à effet de champ, un condensateur auxiliaire monté entre la grille et la source dudit transistor à effet de champ, une diode connectée en série avec l'espace drain-source dudit transistor à effet de champ, et un coupleur.

D'autres caractéristiques et avantages de l'invention ressortirons de la description suivantes de modes particuliers de réalisation, en référence aux dessins annexés, sur lesquels:

- la figure 1 est une vue schématique d'un mode général de réalisation de dispositif d'alimentation autonome selon l'invention,
- la figure 2 est une vue schématique d'un mode particulier de réalisation de dispositif d'alimentation autonome selon l'invention de type unipolaire avec une source pulsée haute tension,
- la figure 3 représente le schéma d'un exemple de commutateur à commande flottante utilisable selon l'invention,
- la figure 4 represente le schéma d'un exemple de circuit de commande du coupleur d'un commutateur utilisable dans le dispositif selon l'invention,
- la figure 5 représente le diagramme des signaux de commande de l'organe de commutation et des commutateurs du dispositif de la figure 2,
- la figure 6 représente un circuit permettant de créer un déphasage de la commande de la fermeture de l'organe de commutation de la source pulsée haute tension,
- la figure 7 représente en fonction du temps, le courant et la tension en sortie du circuit de la figure 6,
- la figure 8 est un schéma d'ensemble d'un exemple de dispositif d'alimentation autonome, à fonctionnement bipolaire, avec un organe de commutation et six commutateurs,
- la figure 9 est un schéma d'ensemble d'un exemple de dispositif d'alimentation autonome simplifié, à fonctionnement unipolaire,
- la figure 10 représente un exemple de séquence de transmission optique par les cellules électrooptiques d'une paire de lunettes stéréoscopiques, et
- les figures 11 et 12 representent des exemples de séquences électriques de commande de cellules électrooptiques, respectivement de type bipolaire et unipolaire, pour l'ensemble des dispositifs droit et gauche d'une paire de lunettes stéréoscopiques.
- les figures 13, 14 et 15 représentent trois types de séquences de transmission optique pouvant être appliquées aux cellules électrooptiques droite et gauche d'une même paire de lunettes.

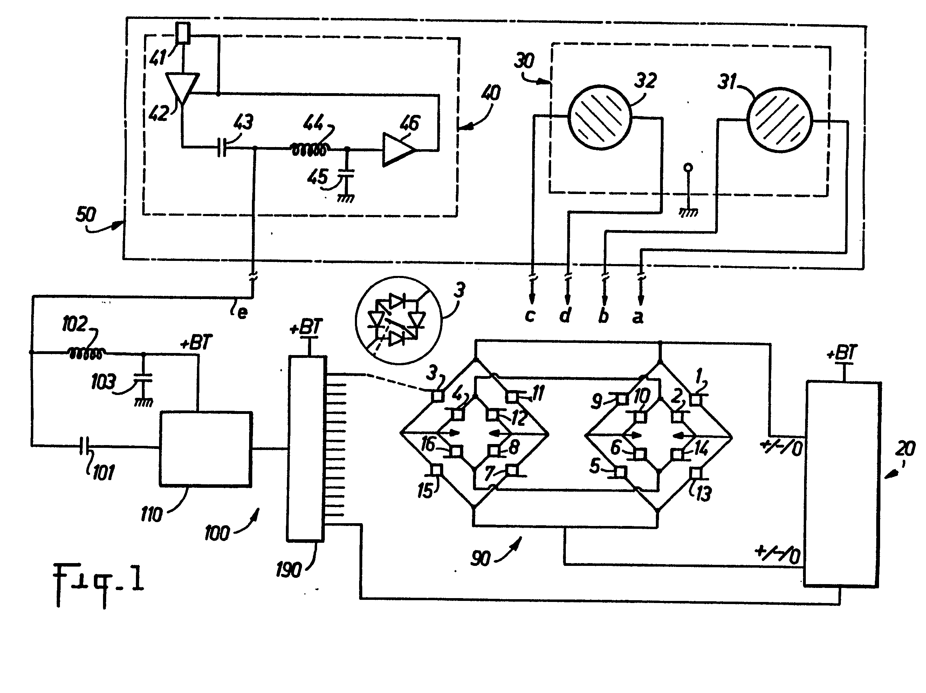

On voit sur la figure 1 le schéma général d'un dispositif d'alimentation autonome pour une paire de lunettes 50 d'observation d'image à effet stéréoscopique comportant un sousensemble 30 avec un dispositif droit 31 et un dispositif gauche 32 d'observation destinés à venir en regard des yeux droit et gauche de l'observateur respectivement. La monture de lunettes permettant de placer les dispositifs droit et gauche 31, 32 en face des yeux de l'observateur peut être de structure classique, avec deux branches destinées à porter sur les oreilles de l'observateur et une partie frontale antérieure destinée à supporter les dispositifs droit et gauche 31, 32.

Les dispositifs droit et gauche 31, 32 comprennent chacun un matériau électrooptique disposé entre deux électrodes. Le matériau peut être du type PLZT par exemple. Les électrodes peuvent être par exemple constituées par un réseau d'électrodes interdigitées déposées sur chacune des faces du cristal. Les dispositifs 31, 32 sont ainsi constitués par des cellules électrooptiques à effet capacitif qui, si elles sont placées entre des polariseurs croisés, peuvent alternativement autoriser ou empêcher la transmission de lumière selon qu'une tension de commande est ou non appliquée sur les électrodes de la cellule.

Un effet stéréoscopique est obtenu lorsque la transmission de lumière est autorisée de façon périodique en alternance sur les dispositifs droit et gauche 31, 32. La figure 10 montre pour la cellule 31 d'un dispositif droit (courbe 201) et pour la cellule 32 d'un dispositif gauche (courbe 202) les séquences de changement d'état entre l'état d'ouverture O (transmission de la lumière) et l'état de fermeture F (non transmission de la lumière).

La figure 11 montre un exemple de séquence électrique de commande des cellules 31, 32, du type bipolaire, avec la forme des signaux électriques de haute tension pouvant être appliqués aux paires d'électrodes des cellules 31, 32 (courbes 203, 204 respectivement) pour créer les séquences de changement d'état de la figure 10.

La figure 12 montre un autre exemple de séquence électrique de commande des cellules 31, 32, du type unipolaire, avec la forme des signaux électriques de haute tension pouvant être appliqués aux paires d'électrodes des cellules 31, 32 (courbes 205, 206 respectivement) pour créer les séquences de changement d'état de la figure 10.

Sur les figures 11 et 12, les signaux électriques de commande des cellules 31, 32 sont représentés par des signaux périodiques de forme carrée appliqués en sequence alternée sur les paires d'électrodes des cellules 31, 32. Ceci correspond pour l'essentiel aux signaux présents aux bornes de chacune des cellules lorsqu'elles sont en service. Toutefois, il est à remarquer que, selon la présente invention, le temps réel de connexion d'une paire d'électrodes à un générateur haute tension est inférieur à la durée de l'application de cette tension sur la cellule. En effet, du fait de sa nature capacitive, une cellule électrooptique 31, 32 peut conserver sa charge en restant polarisée, même après suppression de la connexion au générateur haute tension. L'invention met ainsi essentiellement en oeuvre un dispositif d'alimentation comprenant un générateur séquentiel de haute tension 20 qui fournit de l'énergie à haute tension de façon pulsée et n'assure un stockage interne de l'énergie que sous la forme d'une basse tension. Grâce à l'ensemble 90 de commutateurs, qui aiguillent et commandent l'application impulsionnelle d'une haute tension sur les cellules 31, 32, de l'énergie n'est fournie aux cellules 31, 32 qu'aux transitions antérieures des commutations.

Pour l'observation d'images de télévision, il est nécessaire de disposer d'un signal pilote synchronisé avec le balayage du récepteur de télévision, et de synchroniser l'application alternative des signaux de commande aux cellules 31, 32 à partir de ce signal pilote. Le signal pilote peut être obtenu à partir d'une onde porteuse par exemple de type infra-rouge modulée à partir de signaux de synchronisation de balayage et captée par une cellule infra-rouge 41 disposée dans la paire de lunettes au sein d'un dispositif 40 de réception d'onde porteuse. Comme on peut le voir sur la figure 1, un câble unique e peut servir à la fois à fournir au dispositif de réception 40 une basse tension d'alimentation et à véhiculer une composante alternative haute fréquence superposée au signal de tension continue et représentant le signal pilote capté par la cellule infra-rouge 41. Sur la figure 1, on reconnait au sein du dispositif de réception 40, représenté de façon schématique, un amplificateur de porteuse 42 qui reçoit les signaux délivrés par le capteur 41, un condensateur de liaison 43, disposé entre la sortie de l'amplificateur 42 et le câble de liaison e, ainsi qu'une inductance 44 et un condensateur 45 constituant un séparateur entre la haute fréquence et la basse tension d'alimentation, disposé entre le câble de liaison e et un régulateur 46 d'alimentation des circuits du dispositif de réception 40.

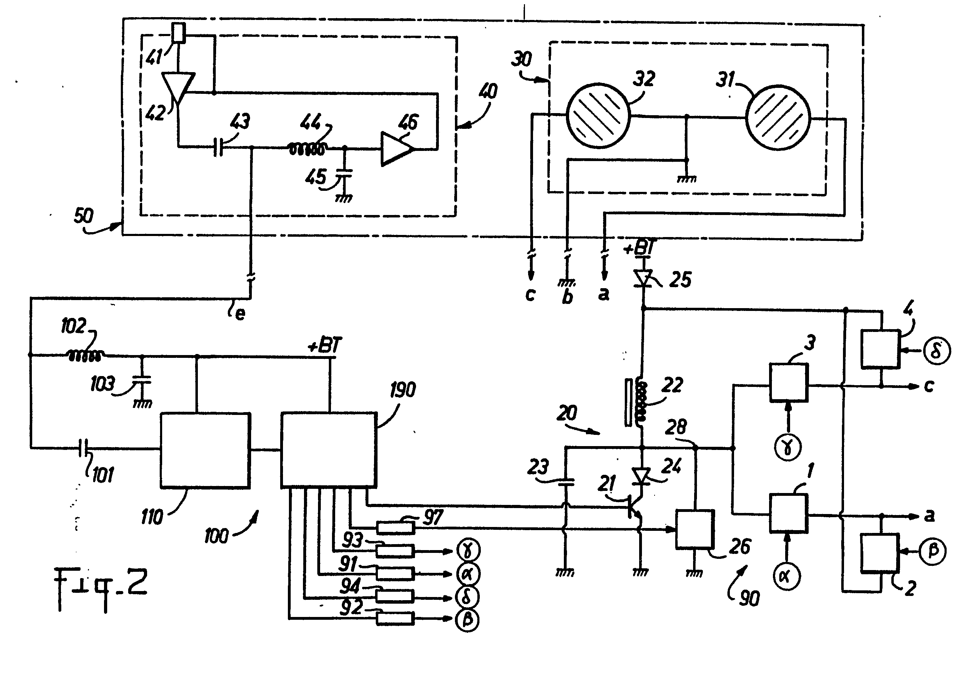

Le dispositif de réception 40, ainsi que le dispositif 30 à cellules électrooptiques 31, 32 sont disposés dans la monture de lunette proprement dite, tandis que le dispositif d'alimentation autonone des dispositifs 30 et 40 est contenu dans un boîtier indépendant, portatif, de faible volume raccordé aux dispositifs 30 et 40 par des fils de liaison a,b,c,d et e. Les fils a et b sont reliés aux électrodes de la cellule droite 31 tandis que les fils c et d sont reliés aux électrodes de la cellule gauche 32. Selon une variante de réalisation, telle qu'illustrée notamment sur la figure 2, les fils b et d sont reliés à la masse et peuvent ainsi être constitués par un seul fil de masse.

Le dispositif proprement dit d'alimentation autonome pour l'application de signaux de commande haute tension sur les électrodes des cellules électrooptiques 31, 32 comprend une source d'alimentation basse tension BT, un circuit 20 de création intermittente d'une haute tension positive ou négative à partir de la source d'alimentation BT, un ensemble de commutateurs à commande flottante 1 à 16, et des circuits 100 de traitement des signaux de synchronisation reçus par le dispositif de réception 40 et transmis sur la ligne e. Les circuits 100 de traitement comprennent un circuit 110 de mise en forme des signaux de synchronisation appliqués depuis la ligne e par l'intermédiaire d'un condensateur de liaison 101. L'inductance 102 et le condensateur 103 servent à la séparation du côté alimentation, entre les signaux d'alimentation basse tension de la source BT et les signaux HF de synchronisation reçus par la ligne e.

Les circuits 100 de traitement comprennent en outre des circuits logiques de séquencement 190 qui peuvent comprendre un réseau logique programmable (PLA) et assurent la production séquentielle synchronisée de signaux de commande des commutateurs 1 à 16 et du circuit 20 de création d'une haute tension.

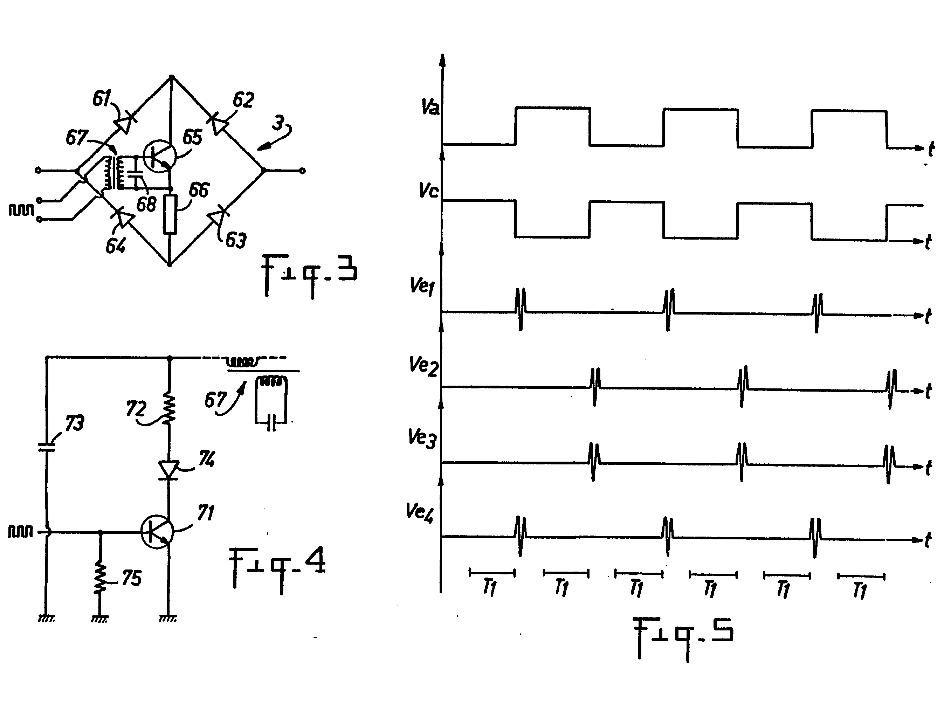

Les commutateurs flottants 1 a 16 de la figure 1, montés dans les mailles de deux réseaux similaires au centre desquels sont connectés les fils a, b et c, d d'alimentation des paires d'électrodes des cellules 31, 32, présentent une structure en pont représentée de façon schématique sur la figure 1 et selon un mode de réalisation particulier, de façon plus détaillée sur la figure 3.

Les commutateurs à commande flottante 1 à 16 peuvent ainsi comprendre un organe de commutation haute tension 65, tel qu'un transistor bipolaire, un transistor à effet de champ ou un thyristor, monté dans la diagonale d'un pont de diodes 61 à 64, et un coupleur 67 relié aux circuits logiques de traitement 190 pour l'application d'un signal de commande à l'organe de commutation 65. Un élément simple ou composite 66, capacitif, résistif ou inductif, et éventuellement non linéaire peut en outre être monté en série avec l'organe de comutation 65 pour permettre une modification des commutations.

Le circuit de commutation 90 de la figure 1 représente le cas général permettant, par l'adaptation des caractéristiques des différents commutateurs 1 à 16, de commander de façons très diverses un couple de cellules électrooptiques 31, 32 à partir d'une source de haute tension pulsée ou alternée produite de façon intermittente et périodique dans un circuit 20 alimenté en basse tension. Le circuit 90 de la figure 1, adapté à une commande bipolaire, permet notamment des transferts de charge d'une cellule électrooptique 31 à l'autre 32 et vice versa, et divers régimes de récupération d'énergie dans les sources basse tension, de même que des modes d'attente pour lesquels la cellule électrooptique 31 ou 32 conserve sa charge en régime flottant. Il permet en outre des court-circuits rapides des cellules 31, 32, autorisant des remises à zéro dynamiques. Naturellement, si des séquences sont telles que certaines mailles sont toujours dans 1e même état, les commutateurs de ces mailles peuvent être remplacés par des composants équivalents ou même dans certains cas par des courtcircuits. D'une façon générale, on peut noter qu'une souplesse maximum est fournie du fait de la configuration mettant en oeuvre pour chaque cellule deux séries successives de commutateurs montés en pont. Ainsi, la commande de la cellule de droite 31 peut impliquer une première série de commutateurs montés en pont 9, 1, 5 et 13, puis une deuxième série de commutateurs également montés en pont 10, 2, 6, 14. La configuration des commutateurs commandant la cellule gauche 32 est ell-même symétrique de celle des commutateurs commandant la cellule droite. De façon plus particulière, les commutateurs 1, 9, 5, 13 respectivement 3, 11, 7, 15 du premier pont associé à la cellule droite 31 respectivement à la cellule gauche 32 commandent l'application de la haute tension sur la cellule commandée 31 respectivement 32 tandis que les commutateurs 2, 10, 6, 14 resp. 4, 16, 8, 12 du second pont associé à la cellule droite 31 resp. à la cellule gauche 32 commandent les transferts d'énergie d'une cellule 31 resp. 32 à l'autre 32 resp. 31.

La figure 2 montre un exemple particulier de réalisation du dispositif de la figure I et fait apparaitre la structure de la source pulsée haute tension 20. Les éléments semblables dans les différents circuits des différentes figures portent les mêmes références et peuvent ainsi être plus facilement identifiés. Les dispositifs 30, 40 de la paire de lunettes 50, et les circuits 100 ayant déjà été décrits en référence à la figure 1, ceux-ci ne seront pas décrits de nouveau. Comme déjà indiqué plus haut, la seule différence consiste en la réunion des fils de connexion b̲ et d̲ en un fil de masse unique.

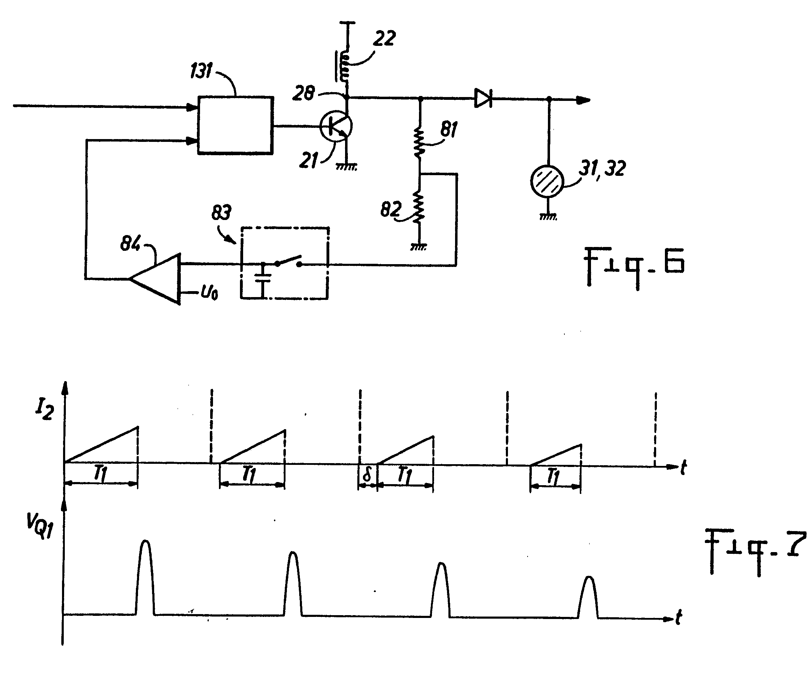

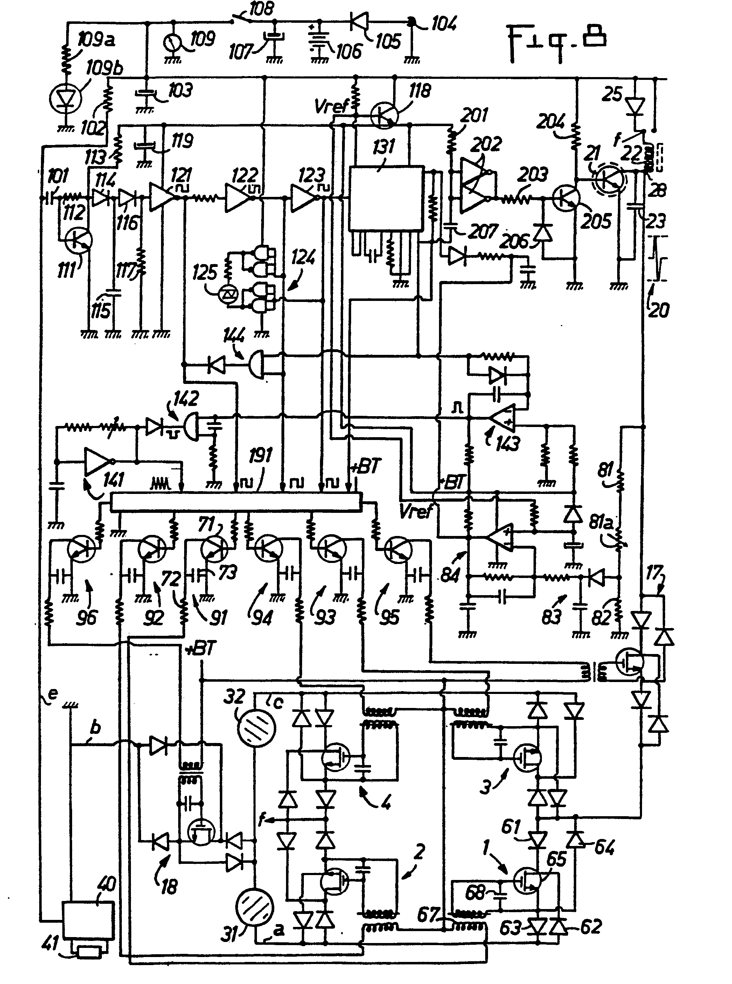

Le mode de réalisation de la figure 2 montre une source d'alimentation haute tension 20 alimentée à partir d'une source basse tension BT et comprenant un organe de commutation 21 constitué par un transistor commandé par les circuits de traitement logique 190. La présence de cet organe de commutation 21 associée à celle d'un élément de charge à courant constant (inductance 22) permet de créer à partir d'une énergie quantifiée une haute tension de façon impulsionnelle et de ne stocker dans le générateur 20 aucune énergie sous forme de haute tension. Les commutateurs 1, 3 à commande flottante, dont la constitution peut être analogue à celle représentée sur la figure 3, assurent l'aiguillage de la haute tension vers les électrodes de la cellule droite 31 et de la cellule gauche 32 respectivement. Les commutateurs 2 et 4 à commande flottante présentent une structure analogue à celle des commutateurs 1 et 3 et jouent un rôle qui sera explicité plus loin en référence au diagramme des temps de la figure 5. Les commutateurs 1, 2, 3, 4 sont commandés par des circuits 91, 92, 93, 94 respectivement qui reçoivent des signaux des circuits logiques 190 de commande des séquences de commutation. Les circuits 91, 92, 93, 94 peuvent présenter une structure analogue à celle représentée sur la figure 4 avec un transistor 71 dont la base reçoit le signal de commande issu des circuits logiques 190, et un condensateur 73 monté en parallèle sur l'espace collecteur-émetteur du transistor 71. Le signal de commande appliqué au coupleur 67 du commutateur à commander est prélevé sur le collecteur du transistor 71. Toutefois, comme représenté sur la figure 4, une resistance de limitation 72 et une diode 74 peuvent être montées en série entre le coupleur 67 et le collecteur du transistor 71. La base du transistor 71 est en outre reliée, à la masse par une résistance 75.

La structure et le fonctionnement du circuit 20 de génération d'une haute tension pulsée vont maintenant être décrits en référence aux figures 2 et 5.

L'inductance 22 est reliée d'une part à la source d'alimentation basse tension BT par l'intermédiaire d'une diode anti-retour 25 et, d'autre part, à un point commun 28 de production d'une haute tension. Un condensateur 23 dont la valeur reste faible par rapport à celle des cellules capacitives 31, 32 et peut être par exemple de l'ordre du dixième de celle-ci est connecté entre le point commun 28 et la masse. Le collecteur du transistor 21 est lui-même relié au point commun 28 par l'intermédiaire d'une diode de protection 24 qui interdit l'application de toute tension inverse sur le transistor 21. Une diode d'écrètage des tensions négatives 27, en série avec un commutateur 26 est en outre connectée entre ledit point commun 28 et la masse. Cette diode 27 dont la cathode est reliée au point commun 28, c'est-à-dire a l'anode de la diode 24 introduit un écrètage des tensions négatives susceptibles d'apparaître sur l'une ou l'autre des cellules capacitives 31, 32. Les commutateurs 2 et 4 sont eux-mêmes connectés entre les fils de connexion a̲, c̲ respectivement d'application de la haute tension aux cellules 31, 32 respectivement et d'autre part au point de connexion de l'inductance 22 avec l'alimentation basse tension BT. Le commutateur 26 est commandé par un circuit 97 analogue aux circuits 91 à 94 et recevant des signaux des circuits logiques de commande 190.

Le fonctionnement du circuit 20 de production d'une haute tension est le suivant: dans une première période de temps $T_1$, le transistor 21 est rendu conducteur et permet le passage d'un courant dans l'inductance 22 à partir de la source basse tension d'alimentation. Le courant dans le transistor 21 et donc au point commun 28 croît pratiquement linéairement en fonction du temps à partir de l'instant initial de fermeture du transistor 21. Au moment du blocage du transistor 21, à la fin d'une phase de conduction $T_1$, le circuit est ouvert brusquement au point commun 28 et le courant emmagasiné dans l'inductance 22 se décharge dans le condensateur 23 et, selon que le commutateur 1 ou 3 est excité et fermé, dans la cellule capacitive 31 ou la cellule capacitive 32. La tension au point 28 présente alors une excursion positive marquée, permettant l'application d'une haute tension sur l'une des cellules 31, 32. Le condensateur 23 sert essentiellement à éviter des flancs trop raides lors de la montée de l'excursion en tension au point 28 et à éviter des suroscillations trop rapides. Le commutateur 1, respectivement le commutateur 3 sont commandés de manière à rester fermés un temps inférieur à l'ouverture de l'organe de commutation constitué par le transistor 21. Lors de l'ouverture du commutateur 1, respectivement du commutateur 3, alors que le transistor 21 reste bloqué, la cellule capacitive 31, resp. 32 reste chargée mais l'énergie résiduelle inutilisée dans l'inductance 22 est renvoyée par le circuit commutateur 26, dans la source d'alimentation BT du fait de la présence de la diode anti-retour 25. Lorsque le transistor 21 est rendu de nouveau conducteur, le courant dans l'inductance recommence à augmenter de façon linéaire pour permettre une nouvelle décharge d'une haute tension lors de l'ouverture suivante du transistor 21. Les commutateurs 1 et 3 sont cependant commandés en alternance toutes les deux périodes du signal de commande du transistor 21 afin d'appliquer une charge alternativement sur la cellule droite 31 et sur la cellule gauche 32. La décharge d'une cellule 31 resp. 32 est commandée par le commutateur 2, respectivement le commutateur 4. Lorsque la cellule 31, resp. la cellule 32 est restée chargée après l'application d'une haute tension à travers le commutateur 1, resp. 3, le commutateur de décharge correspondant 2 resp. 4 est commandé de manière à se fermer pendant un court intervalle de temps au cours de la période de conduction ou éventuellement de blocage du transistor 21 suivant immédiatement la période de blocage ayant entraîné la charge de ladite cellule 31 resp. 32. Lors de la fermeture du commutateur 2 resp. 4, la cellule 31 resp. 32 se décharge dans l'inductance 22 et le transistor 21 si celui-ci est conducteur en contribuant à l'acquisition d'une énergie par l'inductance 22. En pratique, à titre d'exemple, il est possible d'adopter pour le circuit de la figure 2 une séquence de commande telle que celle représentée sur la figure 5 où les commutateurs 1 et 4 sont commandés simultanément (signaux $Ve_1$ et $Ve_4$) et les commutateurs 2 et 3 sont également commandés simultanément (signaux $Ve_1$ et $Ve_4$) mais en alternance avec les commutateurs 1 et 4. Chaque commutateur 1, 2, 3, 4 est ainsi commandé toutes les deux périodes du signal de commande du transistor de commutation 21, et la forme des tensions résultantes $V_a$ et $V_c$ sur les lignes a et c, est représentée sur la figure 5.

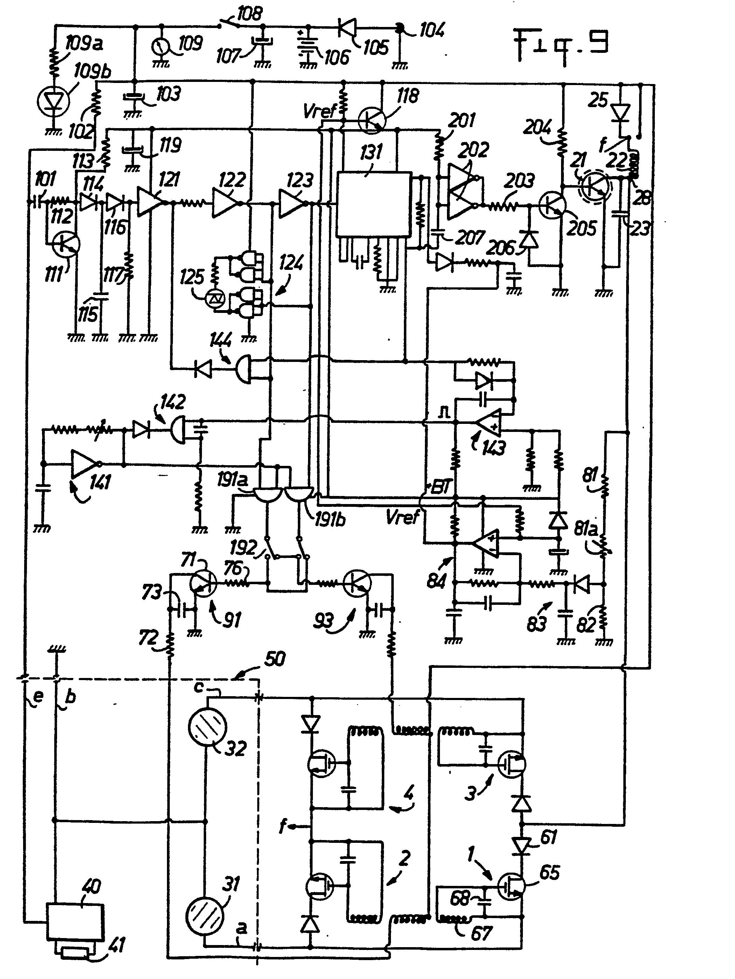

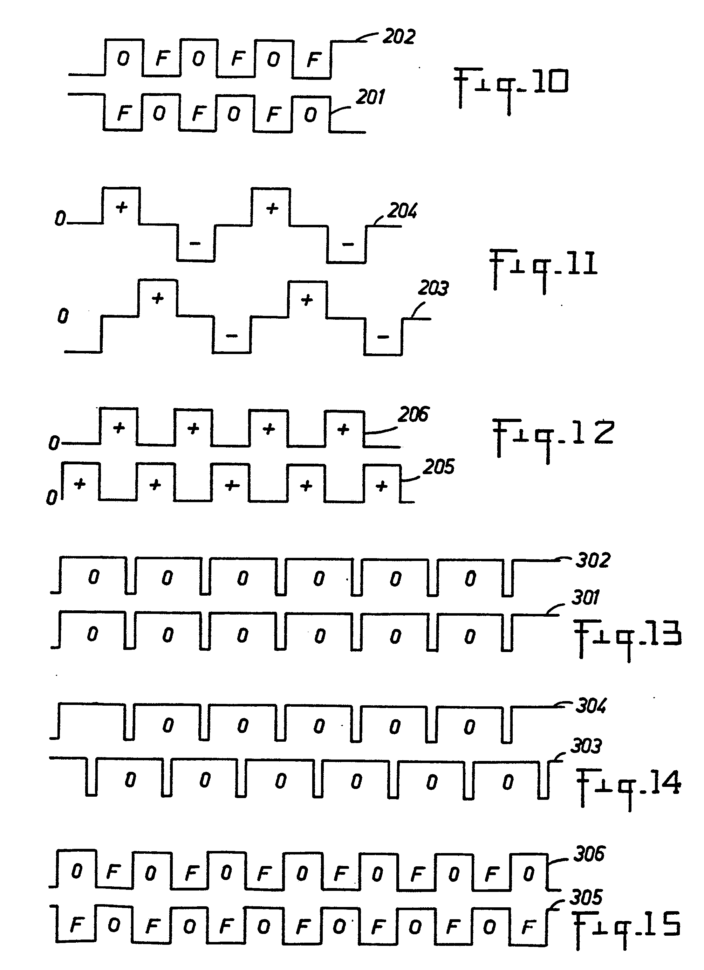

Naturellement, d'autres séquences de commande sont possibles et permettent la récupération d'une énergie plus ou moins grande lors du passage de la commande d'une cellule 31 resp. 32 à l'autre 32 resp. 31. Les séquences de commande peuvent aussi tenir compte de disparités entre les cellules 31 et 32 et présenter deux actions différentes un temps sur deux. Par ailleurs, le circuit de la figure 6, qui permet une commande de la tension au point de sortie 28 de la façon représentée sur la figure 7 contribue également à donner une plus grande souplesse d'utilisation au dispositif d'alimentation autonome selon l'invention. La modulation de la durée de commande de conduction du transistor 21 permet en effet de régler la tension maximale disponible au point 28 pour être appliquée aux cellules 31, 32.

Toutefois, commpte tenu du fait que le système de vision stéréoscopique est synchronisé, les dates d'ouverture du transistor 21 sont imposées. En revanche, puisque le système est périodique, il est possible de différer d'une période à la suivante l'instant de début de conduction du transistor 21. La figure 7 montre d'une part l'aspect de l'évolution du courant $I_L$ circulant dans l'inductance 22 au cours des différentes périodes successives pendant le temps de conduction du transistor 21 et d'autre part la forme de la tension $Vq_1$ disponible au point de sortie 28 lors de l'ouverture du transistor 21 au cours des différentes périodes successives.

Pour la détermination du retard δ à appliquer au début de la commande de la conduction du transistor 21, il convient de détecter la valeur de la tension maximale présente à l'ouverture du transistor 21 sur la sortie 28, puis de comparer la valeur détectée à la valeur souhaitée et enfin d'appliquer la différence à un dispositif de modification du temps de conduction du transistor 21 par insertion d'un retard δ par rapport à la date périodique de commande prévue. Ceci est réalisé par un circuit du type de celui de la figure 6 par lequel la tension au point de sortie 28 est prélevée à l'aide d'un pont diviseur 81, 82 pour être appliquée à un circuit échantillonneur-bloquer 83. La sortie du circuit échantillonneur-bloqur 83 est appliquée sur une première entrée d'un circuit comparateur 84 recevant sur son autre entrée une tension de référence $U_o$. Le signal d'erreur du comparateur 84 est alors appliqué à un circuit de traitement 131 recevant par ailleurs des impulsions de synchronisation liées au signal délivré par le dispositif 40 de réception.

Il est avantageux d'utiliser un circuit de traitement 131 comprenant un composant d'asservissement en phase (circuit PLL) qui permet d'engendrer des signaux déphasés, à partir d'une fréquence incidente de synchronisation. L'écart de phase par rapport au pilotage est déterminé par la tension d'erreur du comparateur 84 et permet ainsi de réaliser un asservissement en tension.

Les coupleurs 67 utilisés en combinaison avec les commutateurs à commande flottante tel que celui représenté sur la figure 3 peuvent être constitués de façon classique par des optocoupleurs ou des transformateurs. Toutefois, il est préférable de mettre en oeuvre des résonateurs à céramique piézoélectrique utilisés en coupleurs, ou des transformateurs linéaires utilisés à la résonance, notamment pour des raisons d'économie d'énergie et de facilité d'obtention de haute tension dite "de mode commun" du composant interrupteur.

On notera que le fait d'utiliser un signal de découpage durant la commutation sur les charges permet d'agir de façon prédéterminée sur des modes d'oscillations parasites de ces dernières pour inhiber ou au contraire favoriser des oscillations dans le matériau et obtenir des performances améliorées.

Avec une source d'alimentation basse tension de 12 volts et une commande de basculements à 50 Hz pour l'ensemble de deux cellules électrooptiques 31, 32 soumises ainsi chacune à 25 changements d'état par seconde et présentant des capacités de l'ordre d'une trentaine de nanofarads, il est possible, avec des temps de basculement de l'ordre de 100 microsecondes aux transitions, d'appliquer des tensions de l'ordre de 1 000 V avec une puissance de l'ordre de un watt du fait que l'énergie peut facilement être récupérée d'une cellule à l'autre.

La figure 8 représente le schéma détaillé d'un exemple de réalisation de dispositif d'alimentation autonome conforme à l'invention et permettant d'effectuer une commande bipolaire des cellules électrooptiques 31, 32. Le schéma de la figure 8 découle ainsi du schéma général de la figure 1.

Sur la figure 8 on voit une source d'alimentation basse tension BT comprenant une batterie d'accumulateurs 106 pouvant être rechargée à travers une diode 105 à partir d'une source extérieure 104, un condensateur réservoir 107, un interrupteur général 108, et des témoins 109, 109a de l'état de la source basse tension. Les signaux HF issus du dispositif 40 de réception d'une onde porteuse modulée sont, après séparation des signaux d'alimentation basse tension, appliqués à un préamplificateur 111, 112, 113, puis à un étage de mise en forme 110 comprenant un circuit de lissage 114, 115, 116, 117 ou de décodage. Les signaux issus de l'étage de mise en forme 110 sont ensuite soumis à des déphasages successifs par les circuits 121, 122, 123 et appliqués à un composant 131 à boucle de verrouillage de phase auquel est également appliqué le signal d'erreur d'un comparateur 84. Les signaux de sortie du circuit 131 à boucle de verrouillage de phase, alimenté par une tension d'alimentation régulée par le transistor 118, sont appliqués par l'intermédiaire d'un condensateur de liaison 207 et d'un circuit de commande 202 à 206 à la base du transistor 21 servant de découpeur haute tension, dont le collecteur est relié par la diode 24 à l'inductance réservoir 22.

Les circuits logiques de traitement 100 comprennent une unité logique 191 programmée ou programmable qui génère les séquences de commutation en délivrant des signaux de commande qui, par l'intermédiaire de circuits de commande 91 à 96 sont appliqués aux primaires des coupleurs 67 des commutateurs 1, 2, 3, 4, 17, 18 à commande flottante. Les circuits logiques de traitement 100 comprennent en outre un témoin de parité 124 à diode électroluminescente 125, connecté en sortie des déphaseurs 122 et 123. Par ailleurs, il est associé au pont diviseur 81, 81a, 82, au circuit échantillonneur-bloqueur 83 et au comporateur 84 qui commandent le déphasage appliqué par le circuit 131, des circuits de verrouillage et d'inhibition 143, 144, un monostable 142 et un oscillateur 141.

La figure 9 représente une version simplifiée du dispositif de la figure 8. Le dispositif de la figure 9 assure une commande de type unipolaire des cellules électrooptiques 31 et 32 et comporte seulement quatre commutateurs 1 à 4 qui, du fait de la commande unipolaire peuvent ne comprendre qu'un seul transistor bipolaire ou transistor à effet de champ 65, un condensateur 68 associé au coupleur 67 et une diode 61 en remplacement du pont de diodes des commutateurs du dispositif de la figure 8. Par ailleurs, il est possible d'utiliser pur les coupleurs 67 deux transformateurs linéaires doubles à la place des quatre transformateurs simples du mode de réalisation de la figure 8, compte tenu de la synchronicité de commande des transistors 65 des commutateurs 1 à 4 deux à deux. De plus, les circuits logiques de commande 100 peuvent être simplifiés du fait de la simplicité de la séquence. Ainsi, deux portes logiques 191a, 191b associées à un inverseur 192 commandant deux circuits de commande 91, 93 des paires de commutateurs 1, 2, 3, 4 peuvent être substitués à l'ensemble des circuits 191 et 91 à 96 de la figure 8. Les commutateurs 17 et 18 de la figure 8 disposés respectivement du côté de la haute tension et de la masse peuvent également être supprimés dans le schéma de la figure 9 qui constitue ainsi un mode de réalisation particulièrement simple.

Le dispositif autonome d'alimentation selon l'invention est adapté à l'alimentation de lunettes susceptibles, en fonction du type de commande adopté, de permettre ou non la vision stéréoscopique.

Ainsi, la figure 13 montre la forme des séquences de transmission optique 301, 302 appliquées aux cellules électrooptiques droite 31 et gauche 32 respectivement de lunettes dans le cas où une horloge interne synchronisable rythme la création périodique d'une haute tension par le circuit d'alimentation 20 sans intervention d'un signal extérieur de synchronisation. La figure 13 concerne à titre d'exemple une commande synchrone identique pour les deux cellules 31 et 32 dans laquelle les cellules 31, 32 sont la plupart du temps à l'état ouvert O et ne comportent que de brèves interruptions périodiques de transmission optique.

La figure 14 montre des séquences de transmission optique 303 et 304 appliquées aux cellules électrooptiques droite 31 et gauche 32 dans un cas très semblable à celui de la figure 13 mais où, en fonction de la commande du dispositif d'alimentation, les brèves interruptions périodiques de transmission optique d'une cellule 31 sont décalées dans le temps par rapport aux interruptions périodiques de transmission optique de l'autre cellule 32.

La figure 15 montre des séquences de transmission optique 305 et 306 appliquées aux cellules électrooptiques droite 31 et gauche 32 dans le cas où l'on désire obtenir un effet stéréoscopique Dans ce cas, il y a synchronisation de l'horloge interne avec un signal extérieur de synchronisation et les interruptions périodiques de transmission optique F des cellules 31 et 32 sont alternées dans le temps et égales aux périodes de transmission optique O.

## Revendications

1. Dispositif d'alimentation autonome pour dispositif d'observation muni d'au moins une cellule (31, 32) électrooptique à effet capacitif contenant un matériau électrooptique coopérant avec un système d'électrodes de commande recevant des (signaux électriques d'amplitude élevée, et comportant des moyens d'horloge pour permettre la commande de l'application périodique de signaux électriques de commande sur le système d'électrodes des cellules électrooptiques (31, 32), caractérisé en ce qu il comprend une source d'alimentation basse tension (106), un circuit (20) de création intermittente d'une haute tension à partir de la source d'alimentation basse tension (106), un ensemble (1 à 18) de commutateurs interposés entre le circuit (20) de création intermittente d'une haute tension et le système d'électrodes des cellules électrooptiques (31, 32), et des circuits (100) de traitement des signaux d'horloge pour commander d'une façon synchronisée le circuit (20) de création intermittente d'une haute tension et les commutateurs (1 à 18).

2. Dispositif d'alimentation autonome selon la revendication 1, caractérisé en ce que le circuit (20) de création intermittente d'une haute tension comprend une inductance (22) et un organe de commutation (21) montés en série aux bornes de la source d'alimentation basse tension (106), ainsi qu'un condensateur (23) monté en parallèle sur l'organe de commutation (21), et en ce que l'organe de commutation (21) est commandé de façon périodique à partir des circuits (100) de traitement de signaux.

3. Dispositif d'alimentation autonome selon la revendication 2, caractérisé en ce qu'il comprend un premier commutateur (1) monté entre le point commun (28) de l'inductance (22) et de l'organe de commutation (21) et une électrode de l'une des cellules (31) électrooptiques à effet capacitif, et en ce que le premier commutateur (1) est commandé de manière à être fermé dès le début de l'ouverture de l'organe de commutation (21) et pendant un temps inférieur au temps d'ouverture de l'organe de commutation (21).

4. Dispositif d'alimentation autonome selon la revendication 3, caractérisé en ce qu'il comprend en outre un second commutateur (2) monté entre l'électrode de l'une des cellules électrooptiques (31) et l'extrémité de l'inductance (22) connectée, par l'intermédiaire d'une diode anti-retour (25) à la source d'alimentation basse tension (106) et en ce que le second commutateur (2) est commandé de manière à être fermé dès le début de la fermeture de l'organe de commutation (21) et pendant un temps inférieur au temps de fermeture dudit organe de commutation (21).

5. Dispositif d'alimentation autonome selon la revendication 3, caractérisé en ce qu'il comprend des premier et troisième commutateurs (1, 3) montés entre d'une part le point commun (28) de l'inductance (22) et de l'organe de commustation (21) et, d'autre part, une électrode des première et seconde cellules électrooptiques (31, 32) respectivement, et des second et quatrième commutateurs (2, 4) montés entre d'une part l'extrémité de l'inductance (22) connectée, par l'intermédiaire d'une diode antiretour (25) à la source d'alimentation basse tension (106) et d'autre part respectivement le point commun ente le premier commutateur (1) et la première cellule électrooptique (31) et le point commun entre le troisième commutateur (3) et la seconde cellule électrooptique (32), en ce que les premier et quatrième commutateurs (1, 4) sont commandés de manière à être fermés simultanément dès le début de l'ouverture de l'organe de commutation (21), toutes les deux périodes du signal de commande de l'organe de commutation (21) tandis que les second et troisième commutateurs (2, 3) sont commandés de manière à être fermés simultanément dès le début de l'ouverture de l'organe de commutation (21) durant les périodes du signal de commande de l'organe de commutation (21) où les premier et quatrième commutateurs (1, 4) restent ouverts en permanence, et en ce que la durée de fermeture des premier, second, troisième et quatrième commutateurs (1, 2, 3, 4) est à chaque fois inférieure à la durée d'ouverture de l'organe de commutation (21).

6. Dispositif d'alimentation autonome selon l'une quelconque des revendications 2 à 5, caractérisé en ce qu'une diode d'écrètage est montée en parallèle sur ledit condensateur (23), lui-même disposé en parallèle sur l'organe de commutation (21).

7. Dispositif d'alimentation autonome selon l'une quelconque des revendications 2 à 6, caractérisé en ce que ledit organe de commutation (21) monté en parallèle sur le condensateur (23) comprend une diode de protection (24) connectée en série avec l'élément de commutation proprement dit (21).

8. Dispositif d'alimentation autonome selon l'une quelconque des revendications 2 à 7, caractérisé en ce qu'il comprend un circuit (81 à 84) de modulation de la durée de commande de fermeture de l'organe de commutation (21).

9. Dispositif d'alimentation autonome selon la revendication 8, caractérisé en ce qu'il comprend un pont diviseur (81, 82) de mesure de la haute tension appliquée périodiquement au point commun (28) de l'inductance (22) et de l'organe de commutation (21), un circuit échantillonneur bloqueur (83), un comparateur (84) entre la tension échantillonnée et une tension de référence $V_{ref}$ et un circuit (131, 143, 144) d'application d'un retard, fonction de la valeur du signal de sortie dudit comparateur (84), au signal de commande du passage à l'état de fermeture de l'organe de commutation (21).

10. Dispositif d'alimentation autonome selon l'une quelconque des revendications 2 à 9, caractérisé en ce que les circuits (100) de traitement des signaux de synchronisation reçus par les moyens de réception (40) comprennent un circuit d'asservissement de phase (131).

11. Dispositif d'alimentation autonome selon l'une quelconque des revendications 2 à 10 caractérisé en ce que les circuits (100) de traitement des signaux de synchronisation reçus par les moyens de réception (40) comprennent un réseau logique programmable (190) pour la commande des séquences de commutation les commutateurs (1 à 18).

12. Dispositif d'alimentation autonome selon l'une quelconque des revendications 2 à 11 caractérisé en ce que les commutateurs (1 à 18) à commande flottante comprennent un organe de commutation haute tension (65), tel qu'un transistor bipolaire, un transistor à effet de champ ou un thyristor, monté dans la diagonale d'un pont de diodes 61 à 64, et un coupleur (67) pour l'application d'un signal de commande à l'organe de commutation (65).

13. Dispositif d'alimentation autonome selon la revendication 12, caractérisé en ce que le coupleur (67) est du type coupleur piézoélectrique ou transformateur linéaire à la résonance.

14. Dispositif d'alimention autonome selon l'une quelconque des revendications 2 à 13, caractérisé en ce que la source d'alimentation basse tension (106), le circuit (20) de création intermittente d'une haute tension, l'ensemble (1 à 18) de commutateurs et les circuits (100) de traitement des signaux de synchronisation sont réunis dans un boîtier portatif relié aux moyens de réception (40) et aux première et seconde cellules (31, 32) par trois ou quatre fils de liaison (a, b, c, e).

15. Dispositif d'alimentation autonome selon l'une quelconque des revendications 2 à 14, caractérisé en ce que l'ensemble des commutateurs (1 à 4, 17, 18) est à commande flottante et assure une commande bipolaire de la haute tension appliquée aux électrodes des première et seconde cellules électrooptiques (31, 32).

16. Dispositif d'alimentation autonome selon l'une quelconque des revendications 2 à 14, caractérisé en ce que l'ensemble de commutateurs (1 à 4) assure une commande unipolaire de la haute tension appliquée aux électrodes des permière et seconde cellules électrooptiques (31, 32).

17. Dispositif d'alimentation autonome selon l'une quelconque des revendications 1 à 16, caractérisé en ce qu'il comprend des moyens d'adaptation du signal de découpage durant la commutation sur les charges pour agir de façon prédéterminée sur des modes d'oscillations parasites de ces dernières.

18. Dispositif d'observation du type hublot comprenant une cellule électrooptique (31) à effet capacitif unique, et un dispositif d'alimentation selon l'une quelconque des revendications 1 à 17.

19. Dispositif d'observation du type lunettes comprenant des première et seconde cellules (31, 32) électrooptiques à effet capacitif coopérant chacune avec un système d'électrodes et un dispositif d'alimentation autonome selon l'une quelconque des revendications 1 à 17, les circuits (100) de traitement des signaux d'horloge comprenant des moyens de synchronisation pour commander séquentiellement le circuit (20) de création intermittente d'une haute tension et les commutateurs (1 à 18).

20. Dispositif selon la revendication 19, caractérisé en ce que les lunettes sont des lunettes d'observation à effet stéréoscopique, en ce que le dispositif d'alimentation comprend des moyens (40) de réception d'une onde porteuse modulée par des signaux de synchronisation pour permettre la commande de l'application périodique synchronisée de signaux électriques de commande d'amplitude élevée alternativement sur les systèmes d'électrodes les première et seconde cellules (31, 32) et en ce que les circuits (100) de traitement des signaux d'horloge comprennent des moyens de traitement de synchronisation reçus par les moyens de réception (20) de création intermittente d'une haute tension et les commutateurs (1 à 18).

## Claims

1. An autonomous power supply for an observation device including at least one capacitive-effect electro-optical cell (31, 32) containing an electro-optical material cooperating with a system of control electrodes which receive high-amplitude electrical signals, and including clock systems to control the periodical application of electrical control signals to the electrode system of electro-optical cells (31, 32), further including one low-voltage source (106), one circuit (20) creating intermittent high-voltage from low-voltage power source (106), one set (1 to 18) of switches between circuit (20) creating the intermittent high-voltage and the system of electrodes of electro-optical cells (31, 32) and circuits (100) processing clock signals to control synchronously the circuit (20) creating the intermittent high-voltage and switches (1 to 18).

2. An autonomous power supply according to claim 1, wherein circuit (20) creating intermittent high-voltage further includes an inductance coil (22) and a switching component (21) mounted in series with the terminals of said low-voltage power source (106) as well as one capacitor (23) mounted in parallel on switching component (21), and wherein said switching component (21) is controlled periodically from signal processing circuits (100).

3. Autonomous power supply according to claim 2, further including a first switch (1) mounted between common point (28) of inductance coil (22) and switching component (21) and one electrode of one capacitive-effect electro-optical cell (31), and wherein first switch (21) is controlled so as to be closed starting from the time switching component (21) begins to open and for a time less than is required to open switching component (21).

4. An autonomous power supply according to claim 3, further including second switch (2) mounted between the electrode of one electro-optical cell (31) and the end of inductance coil (22), connected through anti-feedback diode (25) to low-voltage power source (106), and wherein second switch (2) is controlled so as to be closed at the time when switching component (21) starts to be closed and for a time longer than is required to close said switching component (21).

5. An autonomous power supply according to claim 3, further including first and third switches (1, 3) connected between common point (28) of inductance coil (22) and switching component (21), on the one hand, and one electrode of first and second electro-optical cells (31, 32), respectively, on the other hand, and second and fourth switches (2, 4) mounted between the end of inductance coil (22), connected through an anti-feedback diode (25) to low-voltage power supply (106), on the one hand, and on the other hand, respectively, to the commmon point between first switch (1) and first electro-optical cell (31) and the common point between third switch (3) and second electro-optical cell (32), wherein first and fourth switches (1, 4) are controlled so as to be closed simultaneously as soon as switching component (21) begins to open, upon every two periods of the control signal of switching component (21) while second and third switches (2, 3) are controlled so as to be closed simultaneously as soon as switching component (21) begins to open during those periods of the signal controlling switching component (21) when first and fourth switches (1, 4) remain continuously open, and wherein the time that first, second, third and fourth switches (1, 2, 3, 4) are closed is each time less than the time that switching component (21) is open.

6. An autonomous power supply according to any claim 2 to 5, wherein a clipping diode is mounted in parallel on said capacitor (23), itself connected in parallel accross switching component (21).

7. An autonomous power supply according to any claim 2 to 6, wherein said switching component (21), mounted in parallel on capacitor (23), includes protection diode (24) connected in series with the switching element itself (21).

8. An autonomous power supply according to any claim 2 to 7, further including a circuit (81 to 84) modulating the duration of the control signal that closes switching component (21).

9. An autonomous power supply according to claim 8, furhter including a divider bridge (81, 82) measuring the high-voltage applied periodically to common point (28) of inductance coil (22) and switching component (21), one sample-and-hold circuit (83), one comparator (84) comparing the sampled voltage with a reference voltage $V_{ref}$ and one circuit (131, 143, 144) applying a delay that is a function of the value of the output signal from said comparator (84), to the control signal that closes switching component (21).

10. An autonomous power supply according to any claim 2 to 9, wherein circuits (100) processing the synchronization signals received by receiving means (40) include a phase control circuit (131).

11. An autonomous power supply according to any claim 2 to 10, wherein circuits (21) processing the synchronization signals received by receiving means (40) include a programmable logic circuit (190) to control the switching sequences of switches (1 to 18).

12. An autonomous power supply according to any one claim 2 to 11, wherein floating-control switches (1 to 18) include a high-voltage switching component (65) such as a bipolar transistor, a field-effect transistor or a thyristor, mounted in the diagonal of a diode bridge (61 to 64) and a coupler (67) to apply a control power signal to switching component (65).

13. An autonomous power supply according to claim 12, wherein coupler (67) is of the piezoelectrical or linear resonance tranformer type.

14. An autonomous power supply according to any claim 2 to 13, wherein low-voltage power source (106), circuit (20) creating intermittent high voltage, set (1 to 18) of switches and circuits (100) processing the synchronization signals are assembled together in a portable box connected to receiving means (40) and to first and second cells (31, 32) by three or four connecting wires (a, b, c, e).

15. An autonomous power supply according to any claim 2 to 14, wherein set (1 to 4, 17, 18) of switches, have floating control and provide a bipolar control of the high voltage applied to the electrodes of first and second electro-optical cells (31, 32).

16. An autonomous power supply according to any claim 2 to 14, wehrein set (1 to 4) of switches provides a monopolar control of the high voltage applied to the electrodes of first and second electro-optical cells (31, 32).

17. An autonomous power supply according to any claim 1 to 16, further including means for adapting the chopper signals during the switching onto the loads, to influence parasitic oscillation modes of the loads in a predetermined fashion.

18. A window type observation device including a single capacitive-effect electro-optical cell (31) and a supply device according to any claim 1 to 17.

19. An observation device of the eyeglass type including first and second capacitive-effect electro-optical cells (31, 32), each cooperating with a system of electrodes and an autonomous power supply device according to any claim 1 to 17, with clock signal processing circuits (100) including synchronization means to control sequentially circuit (20) creating intermittent high-voltage and switches (1 to 18).

20. Device according to claim 19, wherein the glasses are observation glasses with stereoscopic effect, the power supply device includes means (40) receiving a carrier wave modulated by synchronization signals to control the synchronized periodic application of high-amplitude electrical control signals alternately to the electrode systems of first and second cells (31, 32), and wherein clock signal processing circuits (100) include means for processing synchronization signals receiving by receiving means (20) creating intermittent high voltage, and switches (1 to 18).

**Patentansprüche**

1. Batteriebetriebene Stromversorgungsvorrichtung für Betrachtungssystem mit mindestens einer kapazitiven elektrooptischen Zelle (31, 32), die einen elektrooptischen Werkstoff enthält, der selber mit einem Steuerelektroden-System mitwirkt, das elektrische Signale großer Amplitude empfängt, sowie mit Taktgebermitteln zur Steuerung der periodischen Anlegung dem Elektrodensystem der elektrooptischen Zellen (31, 32) von elektrischen Steuersignalen, dadurch gekennzeichnet, daß sie aus einer Niederspannungs-Stromversorgungsquelle (106), einem Schaltkreis (20) zur intermitierenden Erzeugung einer Hochspannung aus der Niederspannungs-Stromversorgungsquelle (106), einer Reihe von zwischen dem Schaltkreis (20) zur intermitierenden Erzeugung einer Hochspannung und des Elektrodensystems der elektrooptischen Zellen (3l, 32) zwischengeschalteten Schaltern (l bis 18), sowie aus Schaltkreisen (100) für die Aufbereitung der Taktsignale zur synchronen Steuerung des Schaltkreises (20) zur intermitierenden Erzeugung einer Hochspannung und der Schaltelemente (1 bis 18) besteht.

2. Batteriebetriebene Stromversorgungsvorrichtung nach Anspruch 1, dadurch gekennzeichnet, daß der Schaltkreis (20) zur intermitierenden Erzeugung einer Hochspannung aus einer Drossel (22) und einem Schaltglied (21), die in Reihenschaltung an den Klemmen der Niederspannungs-Stromversorgungsquelle (106) angeschlossen sind, sowie aus einem parallel zum Schaltglied (21) geschalteten Kondensator (23) besteht, und daß das Schaltglied (21) periodisch über die Signalaufbereitungskreise (100) gesteuert wird.

3. Batteriebetriebene Stromversorgungsvorrichtung nach Anspruch 2, dadurch gekennzeichnet, daß sie aus einem ersten Schalter (1) besteht, der zwischen dem Mittelpunkt (28) der Drossel (22) und des Schaltgliedes (21) und einer Elektrode einer der kapazitiven elektrooptischen Zellen (31) eingebaut ist, und daß der zweite Schalter (1) entsprechend gesteuert wird, um dessen Schließung gleich mit dem Anfang der Öffnung des Schaltgliedes (21) und während einer Zeitspanne zu bewirken, die kleiner ist als die Öffnungszeit des genannten Schaltgliedes (21).

4. Batteriebetriebene Stromversorgungsvorrichtung nach Anspruch 3, dadurch gekennzeichnet, daß sie ausserdem aus einem zweiten Schalter (2) besteht, der zwischen einer Elektrode einer der kapazitiven elektrooptischen Zellen (31) und dem über die Sperrdiode (25) mit der Niederspannungs-Stromversorgungsquelle (106) verbundenen Endpunkt der Drossel (22) eingebaut ist, und daß der zweite Schalter (1) entsprechend gesteuert wird, um dessen Schließung gleich mit dem Anfang der Öffnung des Schaltgliedes (21) und während einer Zeitspanne zu bewirken, die kleiner ist als die Öffnungszeit des genannten Schaltgliedes (21).

5. Batteriebetriebene Stromversorgungsvorrichtung nach Anspruch 3, dadurch gekennzeichnet, daß sie aus den ersten bzw. dritten Schaltern (1, 3), die zwischen dem Mittelpunkt (28) der Drossel (22) und dem Schaltglied (21) einerseits und einer Elektrode der ersten bzw. zweiten kapazitiven elektrooptischen Zelle (31, 32) andererseits eingebaut ist, sowie aus den zweiten bzw. vierten Schaltern (2, 4) besteht, die zwischen dem über die Sperrdiode (25) mit der Niederspannungs-Stromversorgungsquelle (106) verbundenen Endpunkt der Drossel (22) einerseits und mit dem gemeinsamen Anschluß des ersten Schalters (1) und der ersten elektrooptischen Zelle (31) bzw. dem gemeinsamen Anschluß des dritten Schalters (3) und der zweiten elektrooptischen Zelle (32) andererseits eingebaut ist, und daß der erste und der vierte Schalter (1, 4) entsprechend gesteuert werden, um deren Schließung gleich mit dem Anfang der Öffnung des Schaltgliedes (21) bei jeder zweiten Periode des Steuersignals des Schaltgliedes (21) zu bewirken, während der zweite und der dritte Schalter (2, 3) entsprechend gesteuert werden, um deren Schließung gleich mit dem Anfang der Öffnung des Schaltgliedes (21) während der Perioden des Steuersignals des Schaltgliedes (21), bei welcher der erste und der vierte Schalter (1, 4) dauernd offen bleiben, zu bewirken, und daß die Dauer der Schließung des ersten, zweiten, dritten und vierten Schalter (1, 2, 3, 4) jedesmal kleiner als die Öffnungszeit des Schaltgliedes (21) ist.

6. Batteriebetriebene Stromversorgungsvorrichtung nach einem beliebigen Anspruch 2 bis 5, dadurch gekennzeichnet, daß eine Begrenzerdiode parallel zum genannten Kondensator (23) eingebaut ist, der selbst parallel zum Schaltglied (21) geschaltet ist.

7. Batteriebetriebene Stromversorgungsvorrichtung nach einem beliebigen Anspruch 2 bis 6, dadurch gekennzeichnet, daß das mit dem Kondensator (23) parallel geschaltete, genannte Schaltglied (21) mit einer Schutzdiode (24) versehen ist, die in Reihe mit dem eigentlichen Schaltglied (21) geschaltet ist.

8. Batteriebetriebene Stromversorgungsvorrichtung nach einem beliebigen Anspruch 2 bis 7, dadurch gekennzeichnet, daß sie einen Schaltkreis (81 bis 84) zur Modulation der Steuerzeit zur Schließung des Schaltgliedes (21) enthält.

9. Batteriebetriebene Stromversorgungsvorrichtung nach Anspruch 8, dadurch gekennzeichnet, daß sie aus einer Teilerbrücke (81, 82) zur Meßung der periodisch dem Mittelpunkt (28) der Drossel (22) sowie dem Schaltglied (21) angelegten Hochspannung, einem Sampling- und Sperrtor (83), einer Differenzierschaltung (84) zum Vergleich der abgetasteten Spannung und einer Bezugsspannung $V_{ref}$, sowie aus einer Verzögerungsschaltung (131, 143, 144) besteht, die anhand des Wertes des Ausgangssignals der Differenzierschaltung (84) das Steuersignal zur Schließung des Schaltgliedes (21) verzögert.

10. Batteriebetriebene Stromversorgungsvorrichtung nach einem beliebigen Anspruch 2 bis 9, dadurch gekennzeichnet, daß die Aufbereitungskreise (100) der von den Empfangsgliedern (40) empfangenen Synchronisierungssignale einen Phasenaussteuerungskreis (131) enthalten.

11. Batteriebetriebene Stromversorgungsvorrichtung nach einem beliebigen Anspruch 2 bis 10, dadurch gekennzeichnet, daß die Aufbereitungskreise (100) der von den Empfangsgliedern (40) empfangenen Synchronisierungssignale eine programmierbare logische Schaltung (190) zur Steuerung der Schaltfolgen der Schalter (1 bis 18) enthalten.

12. Batteriebetriebene Stromversorgungsvorrichtung nach einem beliebigen Anspruch 2 bis 11, dadurch gekennzeichnet, daß die schwebend gesteuerten Schalter (1 bis 18) ein in der Diagonale einer Diodenbrücke (61 bis 64) eingebautes Hochspannungsschaltglied (65), z. B. bipolarer Transistor, Feldeffekttransistor oder Thyristor, sowie ein Kopplungsglied (67) zum Anlegen eines Steuersignals an das Schaltglied (65) enthalten.

13. Batteriebetriebene Stromversorgungsvorrichtung nach Anspruch 12, dadurch gekennzeichnet, daß das Kopplungsglied (67) einem piezoelektrischen Koppler oder einem Transformator mit linearer Resonanzkennlinie entspricht.

14. Batteriebetriebene Stromversorgungsvorrichtung nach einem beliebigen Anspruch 2 bis 13, dadurch gekennzeichnet, daß die Niederspannungs-Stromversorgungsquelle (106), der Schaltkreis (20) zur intermittierenden Erzeugung einer Hochspannung, sämtliche Schalter (1 bis 18) sowie die Schaltkreise (100) zur Aufbereitung der Synchronisierungssignale in einem tragbaren Gehäuse vereinigt sind, das mit den Empfangsmitteln (40) und den ersten und zweiten Zellen (31, 32) durch drei oder vier Verbindungsleitungen (a, b, c, e) verbunden sind.

15. Batteriebetriebene Stromversorgungsvorrichtung nach einem beliebigen Anspruch 2 bis 14, dadurch gekennzeichnet, daß sämtliche Schalter (1 bis 4, 17, 18) schwebend gesteuert werden sowie eine zweipolige Steuerung der an die Elektroden der ersten bzw. zweiten elektrooptischen Zelle (31, 32) angelegten Hochspannung bewirken.

16. Batteriebetriebene Stromversorgungsvorrichtung nach einem beliebigen Anspruch 2 bis 14, dadurch gekennzeichnet, daß sämtliche Schalter (1 bis 4) eine einpolige Steuerung der an die Elektroden der ersten bzw. zweiten elektrooptischen Zelle (31, 32) angelegten Hochspannung bewirken.

17. Batteriebetriebene Stromversorgungsvorrichtung nach einem beliebigen Anspruch 2 bis 16, dadurch gekennzeichnet, daß sie mit Mitteln zur Anpassung des Choppersignals während der Zuschaltung der Lasten versehen ist, um vorbestimmt auf die störenden Schwingungsarten der gennanten Lasten einwirken zu können.

18. Betrachtungssystem des Beobachtungsfenstertypes, bestehend aus einer einzigen kapazitiven, elektrooptischen Zelle (31) und einer Stromversorgungsvorrichtung nach einem beliebigen Anspruch 1 bis 17.

**0 176 377**

19. Betrachtungssystem des Brillentypes, bestehend aus einer ersten und einer zweiten kapazitiven, elektrooptischen Zelle (31, 32), die jede mit einem Elektrodensystem und einer batteriebetriebene Stromversorgungsvorrichtung nach einem beliebigen Anspruch 1 bis 17 mitwirken, , wobei die Schaltkreise (100) zur Aufbereitung der Taktsignale mit Synchronisierungsmitteln zur folgegebundenen Steuerung des Schaltkreises (20) zur intermittierenden Erzeugung einer Hochspannung und der Schalter (1 bis, 18) versehen sind.

20. Vorrichtung nach Anspruch 18, dadurch gekennzeichnet, daß die gennanten Brillen zur Beobachtung mit stereoskopischem Effekt ausgelegt sind und daß die Stromversorgungsvorrichtung Mittel (40) zum Empfang einer synchronmodulierten Trägerwelle für die Steuerung der abwechselnden, synchronisierten periodischen Anlegung von elektrischen Steuersignalen hoher Amplitude an die Elektrodensysteme einer ersten und einer zweiten Zelle (31, 32) enthalten, und daß die Schaltkreise (100) zur Aufbereitung der Taktsignale aus Bearbeitungsmitteln fur die durch die Empfangsmittel (20) ermittelten Synchronisierungssignale, aus Mitteln für die intermittierende Erzeugung einer Hochspannung sowie aus Schaltern (1 bis 18) bestehen.

Fig. 1

0176377

Fig-2

Fig. 3

Fig. 4

Fig. 5

0 176 377

**Fig. 6**

**Fig. 7**

Fig. 8

Fig. 9

0 176 377

Fig. 10

Fig. 11

Fig. 12

Fig. 13

Fig. 14

Fig. 15